# EUROPEAN PATENT APPLICATION

(11) **EP 4 790 565 A1**
(43) Date of publication of application: **12.08.2026**
(21) Application number: 24888065.0
(22) Date of filing: 07.11.2024
(51) Int. Cl.: G06F 16/22

(54) **DATA PROCESSING METHOD AND DEVICE, CLUSTER, MEDIUM, AND PROGRAM PRODUCT**

(30) Priority: 09.11.2023 CN 202311504534; 30.03.2024 CN 202410390956
(71) Applicant: Huawei Cloud Computing Technologies Co., Ltd., Gui'an New District, Guizhou 550025 (CN)
(72) Inventor: WANG, Huanlong, Guiyang, Guizhou 550025 (CN); FENG, Ke, Guiyang, Guizhou 550025 (CN)
(74) Representative: Gill Jennings & Every LLP
(86) International application number: PCT/CN2024/130600
(87) International publication number: WO 2025/098454

(57) **Abstract**

Embodiments of this application relate to the field of database technologies, and disclose a data processing method and apparatus, a cluster, a medium, and a program product, to improve efficiency of continuously writing data subsequently while storage costs are ensured. The method includes: obtaining a custom row-level expression, where the custom row-level expression is for specifying a condition for determining a field of a target attribute of each piece of row data that is in a first data table as cold data; obtaining the field of the target attribute of each piece of row data in the first data table by using the custom row-level expression, where all pieces of row data in the first data table are stored in a first storage medium; determining cold data, where the cold data is row data whose field of the target attribute meets a specified field; and compressing or migrating the cold data to a second storage medium.

## Description

This application claims priority to Chinese Patent Application No. 202311504534.3, filed with the China National Intellectual Property Administration on November 9, 2023 and entitled "DATA SEPARATION METHOD", which is incorporated herein by reference in its entirety.

This application claims priority to Chinese Patent Application No. 202410390956.0, filed with the China National Intellectual Property Administration on March 30, 2024 and entitled "DATA PROCESSING METHOD AND APPARATUS, CLUSTER, MEDIUM, AND PROGRAM PRODUCT", which is incorporated herein by reference in its entirety.

### TECHNICAL FIELD

This application relates to the field of database technologies, and in particular, to a data processing method and apparatus, a cluster, a medium, and a program product.

### BACKGROUND

A database is applied to services more frequently and widely. In a process of processing a service with a large amount of data, data involved in a service running process occupies a large quantity of storage resources. Therefore, a large amount of service data needs to be stored by using the database. To balance storage performance and storage costs of the database, data to be stored in the database may be classified into hot data and cold data, and stored in different storage media, thereby reducing storage costs while maintaining database storage performance.

Currently, a manner of cold and hot data separation in the database may be performing cold and hot data separation based on time at which last modified data is obtained, in other words, by default, if data is not modified for more than three months, the data may be classified as cold data, and the data classified as the cold data is transferred to another storage medium.

In the foregoing related technology, cold and hot data separation is performed on the data in the database by collecting statistics on a time period between time at which the date is modified and current time. There may be a case in which the data is not modified in a current statistical time period based on a service feature of the data, but is modified in a centralized manner in a subsequent time period. As a result, service data that is classified as cold data has been migrated to another storage medium when the service data needs to be modified subsequently, and modification efficiency of the service data is low, that is, data processing efficiency is low.

### SUMMARY

Embodiments of this application provide a data processing method and apparatus, a cluster, a medium, and a program product, to improve accuracy of cold and hot data separation, to improve efficiency of continuously writing data subsequently.

According to a first aspect, this application provides a data processing method. The method includes: obtaining a custom row-level expression, where the custom row-level expression is for specifying a condition for determining a field of a target attribute of each piece of row data that is in a first data table as cold data; obtaining the field of the target attribute of each piece of row data in the first data table by using the custom row-level expression, where all pieces of row data in the first data table are stored in a first storage medium; determining cold data, where the cold data is row data whose field of the target attribute meets a specified field; and compressing or migrating the cold data to a second storage medium.

It may be understood that, the custom row-level expression is obtained, the condition for determining a custom field of the target attribute as the cold data is determined, the field of the target attribute of each piece of row data that is in the first data table and that is stored in the first storage medium is obtained by using the custom row-level expression, and row data that belongs to cold data is determined by determining whether the field of the target attribute of the row data meets the specified field of the target attribute, to implement a process of cold and hot data separation. Then, the row data that is determined as the cold data is compressed or migrated to the second storage medium, so that when the row data is determined as the cold data, the cold data is processed to avoid affecting a process in which another piece of row data is continuously written into the first storage medium. The condition for determining the cold data is determined by using the field of the target attribute. This facilitates execution of an adaptive cold and hot data separation policy for the row data based on a service feature, improves accuracy of cold and hot data separation for pieces of row data that have different requirements, and improves efficiency of continuously writing data subsequently while storage costs are ensured.

In a possible implementation, access performance of the second storage medium is lower than access performance of the first storage medium.

It may be understood that, if the row data that is determined as the cold data is migrated to the second storage medium whose access performance is lower than that of the first storage medium, it may be ensured that the cold data is stored in a storage medium with lower access performance, and more hot data may be stored in a storage medium with higher access performance, to balance storage performance and storage costs of a database, and improve efficiency of subsequent data access or modification.

In a possible implementation, the cold data is row data whose field of the target attribute meets the specified field and whose time attribute meets a specified condition.

In a possible implementation, the cold data is row data whose field of the target attribute meets the specified field and whose time attribute indicates that a time period between time at which the cold data is last modified or accessed and current system time is greater than a specified threshold.

It may be understood that, the cold and hot data may be separated based on the time attribute and then based on the field of the target attribute, to improve accuracy of cold and hot data separation for pieces of row data that have different requirements.

In a possible implementation, the determining the cold data includes: determining the cold data based on a specified period; determining the cold data when a triggering operation is received; or determining the cold data when an amount of data in the first storage medium reaches a specified threshold.

It may be understood that, cold and hot data separation may be periodically performed on the row data, may be manually triggered, or may be performed when the amount of data in the first storage medium reaches the specified threshold.

In a possible implementation, the compressing the cold data includes: compressing the cold data; and storing the compressed cold data in the second storage medium.

It may be understood that, when the cold data is compressed and stored, the hot data is not affected. Therefore, an overall capacity of the database is expanded when impact on service performance is extremely low without increasing the storage costs.

In a possible implementation, if the first data table has an association relationship with a second data table, the method further includes: determining row data that is in the second data table and that corresponds to the cold data as cold data in the second data table; and compressing or migrating the cold data in the second data table to the second storage medium.

It may be understood that, the first data table and the second data table are associated tables. After row data that is in a data table and that belongs to cold data is determined, row data that is in another data table and that is associated with the row data may also be determined as cold data, to avoid repeatedly performing determining of cold and hot data on the associated row data, to improve efficiency of cold and hot data separation.

According to a second aspect, an embodiment of this application provides a data processing apparatus. The data processing apparatus is configured to perform any data processing method provided in the first aspect.

In a possible implementation, in this embodiment of this application, functional modules of the data processing apparatus may be divided based on the method provided in the first aspect. For example, each functional module may be divided corresponding to each function, or two or more functions may be integrated into one processing module. For example, in this embodiment of this application, the data processing apparatus may be divided into an obtaining module, a determining module, a processing module, and the like based on the functions. For descriptions of possible technical solutions performed by the functional modules obtained through division and beneficial effects, refer to the technical solutions provided in the first aspect or the corresponding possible implementations of the first aspect. Details are not described herein again.

According to a third aspect, an embodiment of this application provides a compute device. The compute device includes a processor and a memory, where the processor is coupled to the memory, the memory is configured to store computer instructions, and the computer instructions are loaded and executed by the processor, to cause the compute device to implement the data processing method according to the foregoing aspect.

According to a fourth aspect, an embodiment of this application provides a compute device cluster. The compute device cluster includes at least one compute device, each compute device includes a processor and a memory, and the processor of the at least one compute device is configured to execute instructions stored in the memory of the at least one compute device, to cause the compute device cluster to perform the data processing method provided in the optional implementations of the first aspect.

According to a fifth aspect, an embodiment of this application provides a computer-readable storage medium. The computer-readable storage medium stores at least one computer program instruction, and the computer program instruction is loaded and executed by a processor, to implement the data processing method according to the foregoing aspect.

According to a sixth aspect, an embodiment of this application provides a computer program product. The computer program product includes computer instructions, and the computer instructions are stored in a computer-readable storage medium. A processor of a compute device reads the computer instructions from the computer-readable storage medium, and the processor executes the computer instructions, so that the compute device cluster performs the data processing method provided in the optional implementations of the first aspect.

For detailed descriptions of the second aspect to the sixth aspect and the implementations of the second aspect to the sixth aspect in this application, refer to detailed descriptions of the first aspect and the implementations of the first aspect. In addition, for beneficial effects of the second aspect to the sixth aspect and the implementations of the second aspect to the sixth aspect, refer to the analysis of beneficial effects of the first aspect and the implementations of the first aspect. Details are not described herein again.

These aspects or other aspects in this application are more concise and comprehensible in the following descriptions.

### BRIEF DESCRIPTION OF DRAWINGS

FIG. 1 is a diagram of a scenario for data processing according to an example embodiment;
FIG. 2 is a diagram of an architecture of a data processing system in the embodiment shown in FIG. 1;
FIG. 3 is a schematic flowchart of a data processing method according to an example embodiment;
FIG. 4 is a diagram of cold and hot data separation for row data in a personnel insurance data table in the embodiment shown in FIG. 3;
FIG. 5 is a diagram of a structure of a data processing apparatus according to an example embodiment;
FIG. 6 is a diagram of a compute device according to an example embodiment;
FIG. 7 is a diagram of a compute device cluster according to an example embodiment; and
FIG. 8 is a diagram of a connection manner between compute device clusters according to an example embodiment.

### DESCRIPTION OF EMBODIMENTS

To make objectives, technical solutions, and advantages in this application clearer, the following further describes implementations of this application in detail with reference to the accompanying drawings.

In this specification, "a plurality of" means two or more. "And/or" describes an association relationship between associated objects, and indicates that three relationships may exist. For example, A and/or B may indicate the following three cases: Only A exists, both A and B exist, and only B exists. The character "/" generally indicates an "or" relationship between the associated objects.

In addition, in the description of this application, unless otherwise specified, "a plurality of" means two or more. "At least one of the following items (pieces)" or a similar expression thereof indicates any combination of these items, including a single item (piece) or any combination of a plurality of items (pieces). For example, at least one item (piece) of a, b, or c may represent a, b, c, a and b, a and c, b and c, or a and b and c, where a, b, and c may be singular or plural.

In addition, to clearly describe the technical solutions in embodiments of this application, terms such as "first" and "second" are used in embodiments of this application to distinguish between same items or similar items having basically same functions and purposes. A person skilled in the art may understand that the terms such as "first" and "second" do not limit a quantity or an execution order, and the terms such as "first" and "second" do not indicate a definite difference. In addition, in embodiments of this application, the term like "example" or "for example" is for representing giving an example, an illustration, or descriptions. Any embodiment or design solution described as an "example" or "for example" in embodiments of this application should not be explained as being more preferred or having more advantages than another embodiment or design solution. Exactly, use of the words such as "example" or "for example" is intended to present a relative concept in a specific manner for ease of understanding.

First, the following describes an example of an application scenario of embodiments of this application.

In an actual service processing process, when data that is involved in the service processing process and that is stored in a database system is applied, as time elapses and a service progresses, an amount of data that needs to be stored in the database system increases. As a result, the database system needs to occupy a large quantity of storage resources, and the database system may use different storage media as storage resources to store the data. Because of an excessively large amount of data, the stored data needs to be classified into hot data or cold data, or may be classified as warm data. The hot data, the cold data, and the warm data may be respectively stored in storage media with different performance. Generally, a compute device may store the hot data in a storage medium with better performance and higher costs. For example, the storage medium with better performance and higher costs may include a solid-state drive. The compute device may compress the warm data or directly store the warm data in a storage medium with poorer performance and lower costs. For example, the storage medium with poorer performance and lower costs may include a hard disk drive. The compute device may compress the cold data or directly archive the cold data in a storage medium with poorest performance and lowest costs. For example, the storage medium with poorest performance and lowest costs may include a disk.

The foregoing cold and hot data separation process may be a data management policy. In the cold and hot data separation process, data may be classified into hot data and cold data, to cause the data to be more effectively managed and stored. The hot data may be data that is frequently accessed and used, and is usually latest data. The data requires fast access and short response time, and therefore is usually stored in a high-speed storage medium (like a memory or the solid-state drive). The cold data may be data that is not frequently accessed and used, and is usually old data. The data may be stored in a low-speed storage medium (like a disk or a cloud storage) or compressed by using a compression algorithm to reduce costs.

Currently, cold and hot data classification may be performed based on a data access or modification frequency. That is, data that is frequently accessed or modified may be classified as hot data, data that is not frequently accessed or modified may be classified as cold data, and data whose access or modification frequency is between those of the two types of data is classified as warm data. Because cold and hot data classification is performed based on a data access or modification frequency, frequently accessed or modified data may be classified as hot data and stored in the storage medium with better performance, so that a high rate of accessing or modifying the hot data can be maintained. Similarly, data that is occasionally accessed or modified may be classified as warm data and stored in the storage medium with poorer performance and lower costs, so that storage resource costs can be reduced for accessing or modifying the warm data while a basic rate requirement is ensured. Similarly, data that is almost not accessed or modified may be classified as cold data and stored in the storage medium with poorest performance and lowest costs, to reduce storage resource costs to a maximum extent while data storage is ensured.

The foregoing database may be a relational database. Data in the relational database may be stored in a form of a two-dimensional data table. In other words, the relational database may be a database including a plurality of two-dimensional row-column tables that can be interconnected to each other.

Cold and hot data classification may be performed on the data table in the relational database based on different granularities. The different granularities may include a row level, a block level, a table level, or a partition level in ascending order. A larger granularity indicates lower accuracy of a determining result of cold and hot data. In other words, to implement more accurate determining of the cold and hot data, determining of the cold and hot data needs to be performed on row-level data (row data).

The relational database may be an Oracle database system. Generally, a condition for determining cold and hot data may be set to determining corresponding row data as cold data when a time difference between time of last modification or access and current system time exceeds three months.

To be specific, a user enters a row-level expression "AFTER 3 MONTHS OF NO MODIFICATION" to append a condition for determining cold and hot data to a data table or a data table partition, to determine a data row as cold data when a time difference between time at which the data row in the data table or the data table partition is last modified or accessed and current system time exceeds three months.

The row-level expression may be an expression for calculating, converting, or filtering the row data in the relational database. The row-level expression may be used in a column definition in a SELECT statement or used in a conditional expression in a WHERE clause. The row-level expression may include elements such as constants, column names, operators, and functions, for calculating or converting each piece of row data. For example, a row-level expression may be for converting a date format of a date column to another date format, or perform operations such as addition, subtraction, multiplication, and division on a value column. A row-level expression may alternatively be for filtering data. For example, a row-level expression may be used in a WHERE clause to obtain through filtering row data that meets a specific condition.

For example, when an order table needs to be stored in a database for a service, each piece of row data in the order table may include an ID field, an order state field, and a field indicating time at which the order is last modified or accessed. The ID field may be for describing an order number, and the order state field may be for describing whether an order is completed. According to the foregoing related technology, a policy "AFTER 3 MONTHS OF NO MODIFICATION" is added to a data table by using a condition for determining row-level cold and hot data in an Oracle database, so that row data corresponding to an order whose time field indicates that the order is not modified or accessed for three months or more may be determined as cold data. If the row data that is in the order table and that is determined as the cold data in the foregoing manner is not accessed or modified for more than three months, but an order state in the row data indicates that the order is not completed, that is, the row data may be accessed or modified in the future, it is inappropriate to determine the row data as the cold data in this case, and a problem of a low processing speed when the row data needs to be accessed or modified subsequently.

To be specific, the manner of determining cold and hot data based only on time of last access or modification according to the related technology is limited, and is not applicable to different service requirements. For some pieces of row data that have a service feature, it is inaccurate to determine, based only on time of last access or modification, that the row data is not frequently accessed or modified subsequently, and a data access or modification rate may be affected subsequently.

In view of this, in embodiments of this application, to implement a more accurate cold and hot data separation process for a service of cold and hot data separation based on a condition for determining cold data by using an attribute field in a data table, a compute device may obtain a field of a target attribute of each piece of row data that is in the data table and that is in a first storage medium, where the target attribute may be any attribute of the row data, and determine whether row data belongs to cold data or hot data by determining whether the field of the target attribute of the row data is a specified field of the target attribute, to implement the cold and hot data separation process. Then, the row data that is determined as the cold data is compressed or migrated and stored in another storage medium, that is, a second storage medium, so that when the row data is determined as the cold data, the cold data is compressed or migrated. In this way, it is ensured that the compute device may determine a cold and hot data status of the row data based on the field of the target attribute of the row data. This facilitates execution of an adaptive cold and hot data separation policy for the row data based on a service feature, and improves accuracy of cold and hot data separation for pieces of row data that have different requirements. Therefore, the row data can be accurately stored in storage media with different performance, and efficiency of subsequent data access or modification is improved while storage performance and storage costs of a database are balanced.

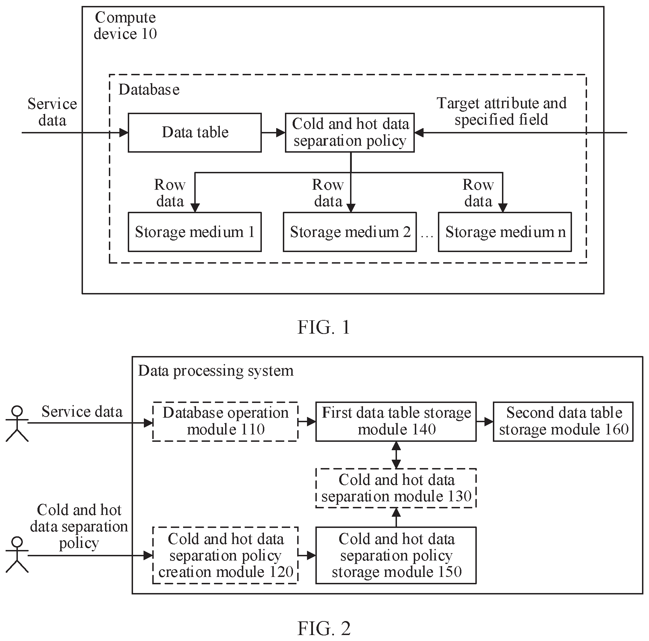

FIG. 1 is a diagram of a scenario for data processing according to an embodiment of this application. As shown in FIG. 1, during actual application, for service data that needs to be stored by using a database, in a process of executing a service, service data involved or generated in the execution process is input into a compute device 10, and the service data is stored in the database in a form of one or more data tables. The database may be a relational database. The database may be used to store each data table in one or more storage media.

The compute device 10 may be a server, a computer device, or a terminal.

The database may be used to respectively store data tables in a plurality of storage media with different performance. The storage media with different performance may be for indicating that data access rates supported by the storage media are different. In other words, the database may be used to store the data table in a storage medium with higher performance that supports a higher data access rate, or may be used to store the data table in a storage medium with lower performance that supports a lower data access rate. The data access rate may include a rate of data processing, such as data reading/writing, modification, and access.

Generally, the storage medium with higher performance corresponds to higher storage costs, and the storage medium with lower performance corresponds to lower storage costs. Therefore, cold and hot data separation needs to be performed on row data in the data table, so that row data that belongs to cold data is stored in the storage medium with lower performance, and row data that belongs to hot data is stored in the storage medium with higher performance, to balance storage performance and storage costs of the database.

For example, as shown in FIG. 1, the storage media used by the database to store the data table include n storage media including a storage medium 1, a storage medium 2, ..., and a storage medium n, where performance of the n storage media is classified into high performance and low performance. For example, a part of the storage media may be storage media, with higher performance, whose supported data access rate is higher than a first threshold, and the other part of storage media may be storage media, with lower performance, whose supported data access rate does not exceed the first threshold.

The storage media may include a memory, a solid-state drive, a hard disk drive, a disk, a cloud storage, and the like. Storage media that may be for storing the hot data may include the memory and the solid-state drive, and storage media that may be for storing the cold data may include the disk and the cloud storage. If row data is further classified as warm data, a storage medium that may be for storing the warm data may include the hard disk drive.

In a possible implementation, the compute device 10 may perform cold and hot data separation on each piece of row data in the data table by receiving a cold and hot data separation policy. The cold and hot data separation policy may include a target attribute and a specified field of the target attribute. The cold and hot data separation policy may further include a condition for determining cold data.

The row data may include fields respectively corresponding to a plurality of attributes. The target attribute may be one or more of the plurality of attributes. A condition for filtering cold and hot data may be for instructing the compute device to obtain a field corresponding to the target attribute of the row data, compare the field with an execution field of the target attribute, and determine, based on a relationship between the field corresponding to the target attribute of the row data and the specified field, whether the row data is cold data or hot data.

The cold and hot data separation policy may specify that if the field corresponding to the target attribute of the row data matches the specified field, the row data is determined as the cold data, or may specify that if the field corresponding to the target attribute of the row data does not match the specified field, the row data is determined as the cold data. Cold data and hot data that correspond to a relationship between the field corresponding to the target attribute of the row data and the specified field and specified in the cold and hot data separation policy are not limited herein.

In a possible implementation, the data table generated by the service data may be preferentially stored in the storage medium with higher performance by using the database. Because an amount of accumulated data is not large at an initial stage of service running, the storage performance may be preferentially considered. With continuous service running, an amount of data that needs to be stored gradually increases. In consideration of the storage costs, cold and hot data needs to be separated. In this case, the compute device 10 may receive the target attribute and the specified field of the target attribute, separately compare the specified field of the target attribute with the field of the target attribute of each piece of row data, determine row data that belongs to cold data, and migrate the row data that belongs to the cold data into the storage medium with lower performance, to balance the storage performance and the storage costs.

FIG. 2 is a diagram of an architecture of a data processing system according to an embodiment of this application. The data processing system may be applied to a compute device. The compute device may be a server. The server may be a server of an X86 architecture, and may be specifically a blade server, a high-density server, a rack server, a high-performance server, or the like.

As shown in FIG. 2, the data processing system may include a database operation module 110, a cold and hot data separation policy creation module 120, a cold and hot data separation module 130, a first data table storage module 140, a cold and hot data separation policy storage module 150, and a second data table storage module 160.

The database operation module 110 is a core module of a database, may be responsible for creating and modifying a data table or a partition, and may further perform operations such as addition, deletion, modification, and querying on data. The database operation module 110 may include a data manipulation language (data manipulation language, DML), and data received by the database operation module 110 may be stored in the first data table storage module 140 in a form of a generated data table. The cold and hot data separation policy creation module 120 may be configured to create an appropriate row-level cold and hot data separation policy for different data tables or partitions, and may receive a row-level cold and hot data separation policy entered or edited by a user. The row-level cold and hot data separation policy may be stored in the cold and hot data separation policy storage module 150 for invocation. The cold and hot data separation module 130 may be configured to: allocate a resident thread or implement a periodic scheduling task, scan the data table in the first data table storage module 140 periodically or when a triggering condition is met, and perform cold and hot data separation on each piece of row data based on the row-level cold and hot data separation policy corresponding to the data table in the cold and hot data separation policy storage module 150. If the first data table storage module 140 is a storage medium with higher performance and higher costs, row data that is determined as cold data may be stored in the second data table storage module 160 with lower performance and lower costs. If the first data table storage module 140 is a storage medium with lower performance and lower costs, row data that is determined as hot data may be stored in the second data table storage module 160 with higher performance and higher costs. The data table stored in the storage medium with lower performance and lower costs may be a compressed data table, so that smaller storage space is occupied.

It should be noted that, an application scenario and a system architecture described in embodiments of this application are intended to describe the technical solutions in embodiments of this application more clearly, and do not constitute a limitation on the technical solutions provided in embodiments of this application. A person of ordinary skill in the art may learn that with evolution of the system architecture and emergence of a new service scenario, the technical solutions provided in embodiments of this application are also applicable to similar technical problems.

For ease of understanding, the following describes an example of a data processing method provided in this application with reference to the accompanying drawings. The data processing method is applicable to the compute device 10 shown in FIG. 1 and the data processing system shown in FIG. 2.

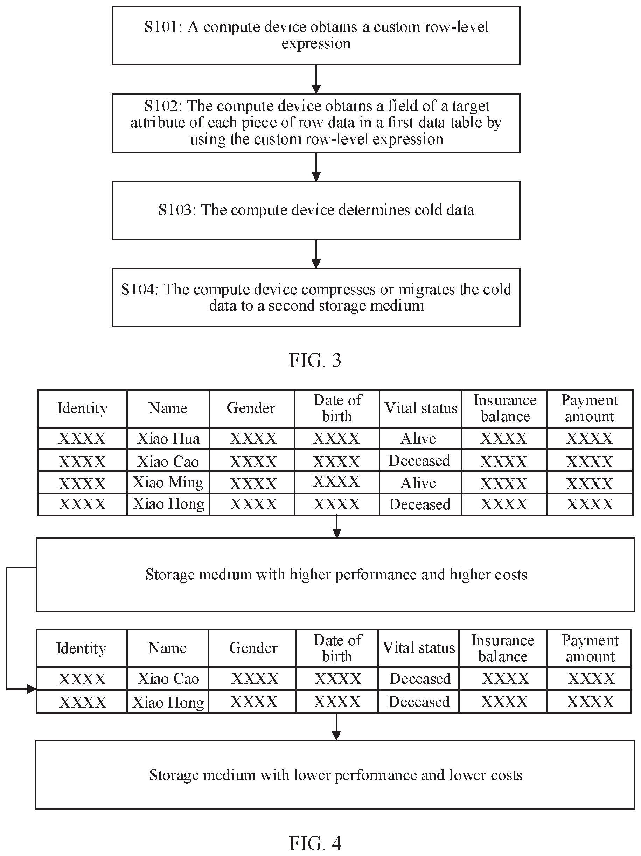

FIG. 3 is a schematic flowchart of a data processing method according to an example embodiment of this application. The data processing method may be performed by a compute device, and the data processing method includes the following steps.

S101: The compute device obtains a custom row-level expression.

The custom row-level expression is for specifying a condition for determining a field of a target attribute of each piece of row data that is in a first data table as cold data.

The custom row-level expression may include the target attribute. The custom row-level expression may be a row-level expression that is edited by a user based on a feature of data in a data table and that is suitable for cold and hot data separation of the data table. The custom row-level expression may be prestored in a storage medium of the compute device. When the data table needs to be scanned to determine whether each piece of row data in the data table belongs to cold data or hot data, the custom row-level expression corresponding to the data table is invoked to determine a corresponding field that needs to be obtained, and determine a target attribute of the cold and hot data based on the corresponding field.

For example, if the data table is a user order table, each data row in the data table may indicate a record related to order information corresponding to one user, and an attribute of each piece of row data may include an order number, time at which the order is last modified, and an order state. A field of the order state may indicate an order completion state or an order incompletion state. There is a high probability that row data to which an order in the order completion state belongs is not accessed or modified subsequently. Therefore, a custom row-level expression indicating that the target attribute is the order state may be obtained. The custom row-level expression may be "ON (State = "completed")", and the compute device may obtain, by using the custom row-level expression, a field corresponding to the order state in each piece of row data in the data table.

To resolve a problem that a same custom row-level expression cannot be universally used because of different target attributes that affect determining of cold and hot data in data tables that are stored in a database, and improve flexibility of accurately determining a cold and hot data status of row data by using the custom row-level expression, a corresponding custom row-level expression may be obtained for each data table, and target attributes indicated by custom row-level expressions corresponding to all data tables may be different.

That is, if different types of data tables are stored in the database, row-level expressions that are edited based on features of data in the types of data table and that are suitable for cold and hot data separation of the data tables are different, and a custom row-level expression corresponding to the first data table may be obtained for the first data table.

In a possible implementation, the custom row-level expression may be automatically generated by the compute device after the compute device analyzes and determines a target attribute that is associated with determining of the cold and hot data of the row data based on a historical access and modification status of each piece of row data in the data table, or is uploaded by the user in advance or edited by the user in real time. A source of the custom row-level expression is not limited herein.

S102: The compute device obtains the field of the target attribute of each piece of row data in the first data table by using the custom row-level expression.

In this embodiment of this application, the compute device may obtain the field of the target attribute of each piece of row data that is in the first data table and that is stored in the database.

All pieces of row data of the first data table are stored in a first storage medium. The target attribute may include any attribute of the row data. A plurality of data tables may be stored in the database, each data table may include a plurality of pieces of row data, and each piece of row data may include fields of a plurality of attributes.

For example, if the data table is a personnel insurance information table, each piece of row data in the data table may indicate an insurance-related record corresponding to one person, and an attribute of each piece of row data may include an identity of the person, a name of the person, a gender of the person, a date of birth of the person, a vital status of the person, an insurance balance of the person, a payment period of the person, and the like. The foregoing attributes may correspond to respective fields. To be specific, the data table may be shown in the following Table 1.

**Table 1**

| Identity | Name | Gender | Date of birth | Vital status | Insurance balance | Payment period |
|---|---|---|---|---|---|---|
| XXXX | Xiao Hua | X | XXX | Alive | XXX | XXX |
| XXXX | Xiao Cao | X | XXX | Deceased | XXX | XXX |
| XXXX | Xiao Ming | X | XXX | Alive | XXX | XXX |
| XXXX | Xiao Hong | X | XXX | Deceased | XXX | XXX |

The target attribute may be the "vital status" in the foregoing data table, and a field of the target attribute may be the field "alive" or the field "deceased" in each piece of row data.

S103: The compute device determines cold data.

In this embodiment of this application, the compute device may determine row data that belongs to cold data or hot data, that is, perform an operation of cold and hot data separation on each piece of row data in the data table, to determine whether each piece of row data is the cold data or the hot data.

The cold data may be row data whose field of the target attribute meets a specified field.

In a possible implementation, the compute device may determine the cold data based on a specified period; the compute device may determine the cold data when a triggering operation is received; or the compute device may determine the cold data when an amount of data in the first storage medium reaches a specified threshold.

In addition, if the data table in the database is related data involved in a service running process, an amount of data stored in the database may be gradually accumulated as service running time elapses.

In a possible implementation, in the service running process, the compute device may store data generated during service running in the first storage medium in a form of the data table, where the data table includes row data, and each row data includes fields of one or more attributes; and in response to a case in which a size of the data table stored in the first storage medium reaches a data amount threshold, the compute device obtains a field of the target attribute of each piece of row data in the data table.

In other words, when there is a large amount of data in the first storage medium in which the data table is preferentially stored, and consequently occupied storage costs are excessively high, scanning of each piece of row data in the data table may be triggered, and cold and hot data separation is performed, to ensure that storage costs and storage performance of a database system are balanced.

In another possible implementation, the compute device may scan, based on a specified period, each piece of row data in the data table in the first storage medium, to obtain the field of the target attribute of each piece of row data, that is, periodically trigger an operation of cold and hot data separation on each piece of row data in the data table. Alternatively, after receiving the triggering operation, the compute device may scan each piece of row data in the data table in the first storage medium, to obtain the field of the target attribute of each piece of row data, that is, perform an operation of cold and hot data separation on each piece of row data in the data table at a triggering moment. The triggering operation may be an operation that the user enters instructions into the compute device to instruct to start cold and hot data separation.

In a possible implementation, if the custom row-level expression includes the specified field of the target attribute, and the field of the target attribute of the row data in the data table belongs to the specified field of the target attribute, the compute device may determine the row data as the cold data or the hot data.

To be specific, after the field of the target attribute of the row data is obtained, the field of the target attribute may be compared with the specified field of the target attribute included in the custom row-level expression. Cold and hot data separation may be performed, depending on whether the field of the target attribute meets the specified field of the target attribute, on the row data to which the field of the target attribute belongs, to determine whether the row data is the cold data or the hot data.

For example, as shown in Table 1, if the custom row-level expression is "ON (Vital status = "deceased")", indicating that the specified field of the specified field of the target attribute that is the "vital status" is "deceased", after the field of the target attribute that is the "vital status" of the row data is obtained as "deceased", because the field "deceased" is consistent with the specified field "deceased", it may be determined that the row data is the cold data.

In a possible implementation, the cold data may be row data whose field of the target attribute meets the specified field and whose time attribute meets a specified condition.

The time attribute may be attribute information related to time at which the cold data is modified or accessed, and the specified condition may be that a time period between time at which the cold data is last modified or accessed and current system time is greater than a specified threshold.

For example, the cold data may be row data whose field of the target attribute meets the specified field and whose time attribute indicates that the time period between the time at which the cold data is last modified or accessed and the current system time is greater than the specified threshold.

For example, if the time attribute of the row data indicates that the time period between the time at which the row data is last modified or accessed and the current system time is greater than the specified threshold, and the field of the target attribute meets a specified field that indicates cold data, the row data is determined as the cold data; or if the time attribute of the row data indicates that the time period between the time at which the row data is last modified or accessed and the current system time is less than or equal to the specified threshold, and the field of the target attribute meets a specified field that indicates hot data, the row data is determined as the hot data.

To be specific, the custom row-level expression may include a specified field of the time attribute and the specified field of the target attribute. The custom row-level expression may be for determining row data that meets the specified field of the time attribute and the specified field of the target attribute as cold data. The custom row-level expression may alternatively be for determining row data that meets the specified field of the time attribute and the specified field of the target attribute as hot data.

For example, if the data table is a user order table, a custom row-level expression may be for determining cold data, and the custom row-level expression may be "AFTER 3 MONTHS OF NO MODIFICATION ON (State = "completed")". "AFTER 3 MONTHS OF NO MODIFICATION" indicates that a time period between time at which row data is last modified or accessed and current system time is more than three months. "ON (State = "completed")" indicates that an order state is an order completion state.

ON may be followed by a keyword indicating a location, a state, a constraint condition, or the like. The custom row-level expression may be any valid row expression. For a service, any complex row-level expression may be written to indicate a rule for determining cold and hot data. However, a specified field referenced in the row-level expression can only be a valid field in the data table.

In a possible implementation, the compute device may determine, based on a specified period, whether the field of the target attribute of each piece of row data in the first data table meets the specified field or determine, when receiving a triggering operation, whether the field of the target attribute of each piece of row data in the first data table meets the specified field.

The triggering operation may be for instructing to start filtering row data that belongs to cold data or hot data in the first data table.

In other words, the compute device may determine, based on the specified period, whether the field of the target attribute of each piece of row data in the first data table meets the specified field, that is, periodically trigger an operation of cold and hot data separation on each piece of row data in the data table. Alternatively, the compute device may determine, after receiving the triggering operation whether the field of the target attribute of each piece of row data in the first data table meets the specified field, that is, perform an operation of cold and hot data separation on each piece of row data in the data table at a triggering moment. The triggering operation may be an operation that the user enters instructions into the compute device to instruct to start cold and hot data separation.

In a possible case, data tables that may have an association relationship and that are in databases are stored in the database, to resolve a problem that after cold and hot data separation is performed on the row data in the database, cold and hot data separation still needs to be performed, by using the custom row-level expression, on row data that is in another data table and that has an association relationship with the row data, resulting in low efficiency of cold and hot data separation. That is, if it is determined that first row data in the first data table is cold data or hot data, second row data that is in a second data table and that corresponds to the first row data is determined as cold data or hot data that is the same as the first row data.

That is, the compute device may determine row data that is in the second data table and that corresponds to the cold data as cold data in the second data table; and compress or migrate the cold data in the second data table to a second storage medium.

For example, if the database includes a personnel insurance data table and a personnel consumption data table, there is an association relationship between the two data tables for row data of a same person, that is, there is an association relationship between the row data corresponding to the same person. After row data that belongs to cold data is determined for each piece of row data in the personnel insurance data table by using a custom row-level expression "ON (Vital status = "deceased")", row data that is in the personnel consumption data table and that corresponds to an identity the same as that in the row data that belongs to the cold data in the personnel insurance data table may be directly determined as the cold data. This avoids a repeated operation of cold and hot data separation on associated row data, and improves efficiency of cold and hot data separation on each piece of row data in the database.

S104: The compute device compresses or migrates the cold data to the second storage medium.

In this embodiment of this application, after determining the row data that belongs to the cold data, the compute device may compress the cold data and still store the cold data in the first storage medium, the compute device may further migrate the cold data to the second storage medium, or the compute device may further compress the cold data and then migrate the cold data to the second storage medium.

In other words, in a possible case, the cold data that is obtained through filtering is compressed and stored, and the hot data is not affected. Therefore, an overall capacity of the database can be expanded when impact on service performance is extremely low without increasing the storage costs.

For example, FIG. 4 is a diagram of cold and hot data separation for row data in a personnel insurance data table according to an embodiment of this application. As shown in FIG. 4, the compute device may determine row data whose field "vital status" is "deceased" in the row data shown in Table 1 as cold data, and compress the row data that is determined as the cold data, migrate the row data to a storage medium with lower costs and lower performance, or archive the row data to a storage medium with lower costs.

In conclusion, in this embodiment of this application, determining of cold and hot data may be performed on the row data based on a user-customized cold and hot data separation policy, and row data that meets a custom row-level expression is obtained through filtering. If the row data is determined as cold data, data compression, data migration, and archiving are performed on the row data that belongs to the cold data. According to this solution, overall performance of a database system is ensured, a data capacity of a database application system is increased with same storage costs, and overall storage costs of the database system are reduced with a same data capacity. This improves accuracy of cold and hot data separation, to improve efficiency of data processing.

The foregoing mainly describes the solutions in embodiments of this application from a perspective of methods. It may be understood that, to implement the foregoing functions, the data processing apparatus includes at least one of corresponding hardware structures and/or software modules for performing the functions. A person of ordinary skill in the art should easily be aware that, in combination with units, algorithms, and steps in the examples described in embodiments disclosed in this specification, this application can be implemented by hardware or a combination of hardware and computer software. Whether a function is performed by hardware in a manner of hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional units of the data processing apparatus may be divided based on the foregoing method examples. For example, each functional unit may be divided corresponding to each function, or two or more functions may be integrated into one processing unit. The integrated unit may be implemented in a form of hardware, or may be implemented in a form of a software functional unit. It should be noted that, in embodiments of this application, unit division is an example and is merely logical function division. During an actual implementation, there may be another division manner.

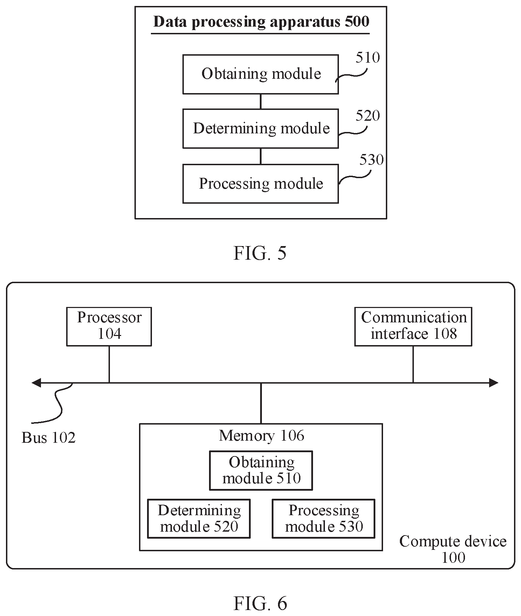

For example, FIG. 5 is a diagram of a structure of a data processing apparatus 500 according to an example embodiment of this application. The data processing apparatus 500 is used in a compute device, or the data processing apparatus 500 may be a compute device. The data processing apparatus 500 includes:
an obtaining module 510, configured to: obtain a custom row-level expression, where the custom row-level expression is for specifying a condition for determining a field of a target attribute of each piece of row data that is in a first data table as cold data; and obtain the field of the target attribute of each piece of row data in the first data table by using the custom row-level expression, where all pieces of row data in the first data table are stored in a first storage medium;
a determining module 520, configured to determine cold data, where the cold data is row data whose field of the target attribute meets a specified field; and
a processing module 530, configured to compress or migrate the cold data to a second storage medium.

For example, with reference to FIG. 3, the obtaining module 510 may be configured to perform S101 and S102 shown in FIG. 3, the determining module 520 may be configured to perform S103 shown in FIG. 3, and the processing module 530 may be configured to perform S104 shown in FIG. 3.

In a possible implementation, access performance of the second storage medium is lower than access performance of the first storage medium.

In a possible implementation, the cold data is row data whose field of the target attribute meets the specified field and whose time attribute meets a specified condition.

In a possible implementation, the determining module 520 is further configured to: determine the cold data based on a specified period; determine the cold data when a triggering operation is received; or determine the cold data when an amount of data in the first storage medium reaches a specified threshold.

In a possible implementation, if the first data table has an association relationship with a second data table, the determining module 520 is further configured to determine row data that is in the second data table and that corresponds to the cold data as cold data in the second data table; and the processing module 530 is further configured to compress or migrate the cold data in the second data table to the second storage medium.

For detailed descriptions of the foregoing optional implementations, refer to the foregoing method embodiments. Details are not described herein again. In addition, for descriptions of any explanation and beneficial effect of the data processing apparatus provided above, refer to the foregoing corresponding method embodiments. Details are not described again.

The obtaining module 510, the determining module 520, and the processing module 530 may all be implemented by using software, or may be implemented by using hardware. For example, the following uses the obtaining module 510 as an example to describe an implementation of the obtaining module 510. Similarly, for implementations of the determining module 520 and the processing module 530, refer to the implementation of the obtaining module 510.

A module is used as an example of a software functional unit, and the obtaining module 510 may include code run on a computing instance. The computing instance may include at least one of a physical host (compute device), a virtual machine, and a container. Further, there may be one or more computing instances. For example, the obtaining module 510 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. One VPC is usually disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit, and the obtaining module 510 may include at least one compute device, like a server. Alternatively, the obtaining module 510 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field programmable gate array (field programmable gate array, FPGA), a generic array logic (generic array logic, GAL), or any combination thereof.

When a plurality of compute devices included in the obtaining module 510 may be distributed in a same region, or may be distributed in different regions. The plurality of compute devices included in the obtaining module 510 may be distributed in a same AZ, or may be distributed in different AZs. Similarly, the plurality of compute devices included in the obtaining module 510 may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the obtaining module 510 may be configured to perform any step in the data processing method, the determining module 520 may be configured to perform any step in the data processing method, and the processing module 530 may be configured to perform any step in the data processing method. The steps implemented by the obtaining module 510, the determining module 520, and the processing module 530 may be specified as required, and all functions of the data processing apparatus are implemented by using the obtaining module 510, the determining module 520, and the processing module 530 to implement different steps in the data processing method. This application further provides a compute device 100. As shown in FIG. 6, the compute device 100 includes a bus 102, a processor 104, a memory 106, and a communication interface 108. The processor 104, the memory 106, and the communication interface 108 communicate with each other through the bus 102. The compute device 100 may be a server or a terminal device. It should be understood that, a quantity of processors and a quantity of memories in the compute device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 6. However, it does not mean that there is only one bus or only one type of bus. The bus 102 may include a path for transmitting information between the components (for example, the memory 106, the processor 104, and the communication interface 108) of the compute device 100.

The processor 104 may include any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 106 may include a volatile memory (volatile memory), for example, a random access memory (random access memory, RAM). The processor 104 may further include a nonvolatile memory (nonvolatile memory), for example, a read-only memory (read-only memory, ROM), a flash memory, a hard disk drive (hard disk drive, HDD), or a solid-state drive (solid-state drive, SSD).

The memory 106 stores executable program code. The processor 104 executes the executable program code to separately implement functions of the obtaining module 510, the determining module 520, and the processing module 530, to implement the data processing method. In other words, the memory 106 stores instructions for performing the data processing method.

Alternatively, the memory 106 stores executable code, and the processor 104 executes the executable code to separately implement functions of the foregoing data processing apparatus, to implement the data processing method. In other words, the memory 106 stores instructions for performing the data processing method.

The communication interface 103 uses a transceiver module, for example, but not limited to, a network interface card or a transceiver, to implement communication between the compute device 100 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

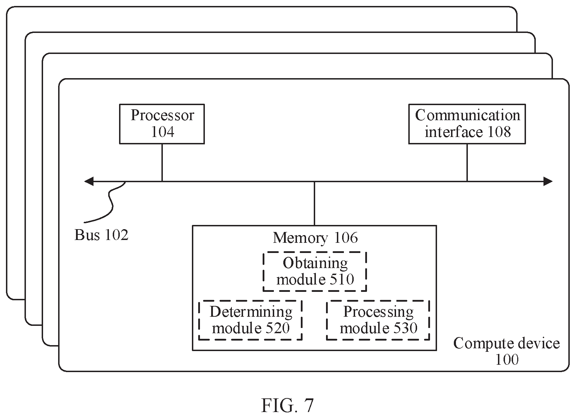

As shown in FIG. 7, the compute device cluster includes at least one compute device 100. A memory 106 in one or more compute devices 100 in the compute device cluster may store same instructions for performing the data processing method.

In some possible implementations, the memory 106 in the one or more compute devices 100 in the compute device cluster may also respectively store a part of instructions for performing the data processing method. In other words, a combination of the one or more compute devices 100 may jointly execute the instructions for performing the data processing method.

It should be noted that, the memory 106 in different compute devices 100 in the compute device cluster may store different instructions respectively for performing a part of functions of the data processing apparatus. In other words, the instructions stored in the memory 106 in different compute devices 100 may implement functions of one or more of the obtaining module 510, the determining module 520, and the processing module 530.

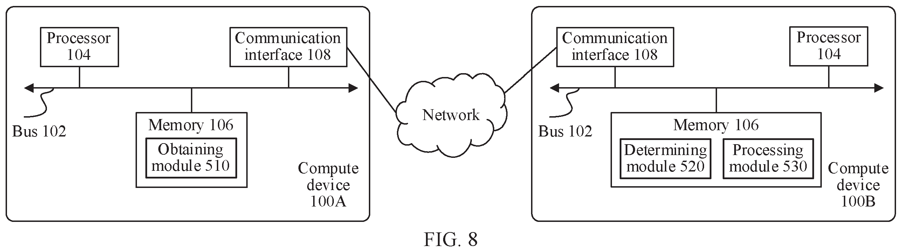

In some possible implementations, the one or more compute devices in the compute device cluster may be connected through a network. The network may be a wide area network, a local area network, or the like. FIG. 8 shows a possible implementation. As shown in FIG. 8, two compute devices 100A and 100B are connected to each other through a network. To be specific, each compute device is connected to the network through a communication interface in the compute device. In this type of possible implementation, a memory 106 in the compute device 100A stores instructions for performing functions of the obtaining module 510. In addition, a memory 106 in the compute device 100B stores instructions for performing functions of the determining module 520 and the processing module 530.

A connection manner between compute device clusters shown in FIG. 8 may be that, in consideration of the data processing method provided in this application in which extensive data storage and data computation need to be performed, it is considered that the functions implemented by the determining module 520, and the processing module 530 are performed by the compute device 100B.

It should be understood that, the functions of the compute device 100A shown in FIG. 8 may also be completed by a plurality of compute devices 100. Similarly, the functions of the compute device 100B may alternatively be completed by a plurality of compute devices 100.

An embodiment of this application further provides another compute device cluster. For a connection relationship between compute devices in the compute device cluster, refer to the similar connection manners of the compute device clusters in FIG. 7 and FIG. 8. A difference lies in that a memory 106 in one or more compute devices 100 in the compute device cluster may store same instructions for performing the data processing method.

In some possible implementations, the memory 106 in the one or more compute devices 100 in the compute device cluster may also respectively store a part of instructions for performing the data processing method. In other words, a combination of the one or more compute devices 100 may jointly execute the instructions for performing the data processing method.

It should be noted that, the memory 106 in different compute devices 100 in the compute device cluster may store different instructions for performing a part of functions of the data processing system. In other words, the instructions stored in the memory 106 in the different compute devices 100 may implement functions of one or more apparatuses in the data processing apparatus.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the data processing method.

An embodiment of this application further provides a computer-readable storage medium. The computer-readable storage medium may be any usable medium that can be stored by a compute device, or a data storage device, for example, a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the compute device to perform the data processing method, or instruct the compute device to perform the data processing method.

Finally, it should be noted that, the foregoing embodiments are merely intended for describing the technical solutions of the present invention rather than limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of the present invention.

## Claims

1. A data processing method, wherein the method comprises:
obtaining a custom row-level expression, wherein the custom row-level expression is for specifying a condition for determining a field of a target attribute of each piece of row data that is in a first data table as cold data;
obtaining the field of the target attribute of each piece of row data in the first data table by using the custom row-level expression, wherein all pieces of row data in the first data table are stored in a first storage medium;
determining cold data, wherein the cold data is row data whose field of the target attribute meets a specified field; and
compressing or migrating the cold data to a second storage medium.

2. The method according to claim 1, wherein access performance of the second storage medium is lower than access performance of the first storage medium.

3. The method according to claim 1 or 2, wherein the cold data is row data whose field of the target attribute meets the specified field and whose time attribute meets a specified condition.

4. The method according to any one of claims 1 to 3, wherein the determining the cold data comprises:
determining the cold data based on a specified period;
determining the cold data when a triggering operation is received;
or
determining the cold data when an amount of data in the first storage medium reaches a specified threshold.

5. The method according to any one of claims 1 to 4, wherein if the first data table has an association relationship with a second data table, the method further comprises:
determining row data that is in the second data table and that corresponds to the cold data as cold data in the second data table; and
compressing or migrating the cold data in the second data table to the second storage medium.

6. A data processing apparatus, wherein the apparatus comprises:
an obtaining module, configured to: obtain a custom row-level expression, wherein the custom row-level expression is for specifying a condition for determining a field of a target attribute of each piece of row data that is in a first data table as cold data; and obtain the field of the target attribute of each piece of row data in the first data table by using the custom row-level expression, wherein all pieces of row data in the first data table are stored in a first storage medium;
a determining module, configured to determine cold data, wherein the cold data is row data whose field of the target attribute meets a specified field; and
a processing module, configured to compress or migrate the cold data to a second storage medium.

7. The apparatus according to claim 6, wherein access performance of the second storage medium is lower than access performance of the first storage medium.

8. The apparatus according to claim 6 or 7, wherein the cold data is row data whose field of the target attribute meets the specified field and whose time attribute meets a specified condition.

9. The apparatus according to any one of claims 6 to 8, wherein the determining module is further configured to: determine the cold data based on a specified period; determine the cold data when a triggering operation is received; or determine the cold data when an amount of data in the first storage medium reaches a specified threshold.

10. The apparatus according to any one of claims 6 to 9, wherein if the first data table has an association relationship with a second data table, the determining module is further configured to determine row data that is in the second data table and that corresponds to the cold data as cold data in the second data table; and the processing module is further configured to compress or migrate the cold data in the second data table to the second storage medium.

11. A compute device cluster, comprising at least one compute device, wherein each compute device comprises a processor and a memory, and a processor of the at least one compute device is configured to execute instructions stored in a memory of the at least one compute device, to cause the compute device cluster to perform the data processing method according to any one of claims 1 to 5.

12. A computer-readable storage medium, comprising computer program instructions, wherein when the computer program instructions are executed by a compute device cluster, the compute device cluster performs the data processing method according to any one of claims 1 to 5.

13. A computer program product, wherein the computer program product comprises instructions, and when the instructions are run by a compute device cluster, the compute device cluster is caused to perform the data processing method according to any one of claims 1 to 5.
